# EUROPÄISCHE PATENTSCHRIFT

(11) **EP 4 434 415 B1**
(45) Veröffentlichungstag und Bekanntmachung des Hinweises auf die Patenterteilung: **26.11.2025**
(21) Anmeldenummer: 24162094.7
(22) Anmeldetag: 07.03.2024
(51) Int. Cl.: A47J 31/44, A47J 31/60

(54) **VERFAHREN ZUM BETRIEB EINER GETRÄNKEZUBEREITUNGSVORRICHTUNG, INSBESONDERE EINES KAFFEEVOLLAUTOMATEN MIT EINEM MEMBRAN-SCHAUMMODUL**
METHOD FOR OPERATING A BEVERAGE PREPARATION DEVICE, IN PARTICULAR A FULLY AUTOMATIC COFFEE MAKER WITH A MEMBRANE FOAM MODULE
PROCÉDÉ DE FONCTIONNEMENT D'UN DISPOSITIF DE PRÉPARATION DE BOISSONS, EN PARTICULIER D'UNE MACHINE À CAFÉ ENTIÈREMENT AUTOMATIQUE DOTÉE D'UN MODULE MOUSSE À MEMBRANE

(30) Priorität: 20.03.2023 DE 102023106899
(43) Veröffentlichungstag der Anmeldung: 25.09.2024
(73) Patentinhaber: Eugster/Frismag AG, 8580 Amriswil (CH)
(72) Erfinder: Wäger, Simon, 8580 Amriswil (CH); Frei, Nicolas, 9320 Arbon (CH); Sonderegger, Remo, 8274 Tägerwilen (CH); Stutz, Dieter, 9565 Bussnang (CH)
(74) Vertreter: Patent- und Rechtsanwälte Behrmann Wagner PartG mbB

(56) Entgegenhaltungen:
- EP-A1- 2 695 559
- EP-B1- 1 472 963
- WO-A1-2022/218587
- CH-A1- 706 370
- DE-A1- 102007 024 443

## Beschreibung

Die vorliegende Erfindung betrifft ein Verfahren zum Betrieb einer Getränkezubereitungsvorrichtung, insbesondere eines Kaffeevollautomaten, nach dem Oberbegriff des Anspruchs 1.

Aus dem Stand der Technik sind Getränkezubereitungsvorrichtungen, insbesondere Kaffeevollautomaten, bekannt, die in der Lage sind, ein Getränkesubstrat, beispielsweise Kaffeebohnen oder Kaffeebohnenmehl, zu bevorraten und/oder herzustellen, beispielsweise durch Zermahlen von Kaffeebohnen, um unter Verwendung von Fluiden, insbesondere Wasser, aus dem Getränkesubstrat ein Getränk aufzubrühen oder auszulaugen und auszugeben. Dabei sind die bekannten Getränkezubereitungsvorrichtungen dazu eingerichtet, im Betrieb unterschiedliche Getränke herzustellen und auszugeben. Die unterschiedlichen Getränke können u.a. über verschiedene Parameter, beispielsweise Menge an Getränkesubstrat, Druck einer Vorverdichtung des Getränkesubstrats in einer Brühkammer, Brühkammerinnendruck beim Brühvorgang, Volumen an Brühfluid, Flussrate des Brühfluids, Temperatur des Brühfluids, Partikelgrößenverteilung (Mahlgrad) des Getränkesubstrats uvm., beeinflusst werden. Dadurch erhält der Bediener oder Benutzer beim Betrieb einer entsprechenden Getränkezubereitungsvorrichtung die Möglichkeit, verschiedene und ggf. nach Bedienervorlieben personalisierte Getränke herzustellen und ausgeben zu lassen.

Bei bekannten Getränkezubereitungsvorrichtungen ist es zudem bereits hinlänglich bekannt, ein Schaummodul vorzusehen, um die hergestellten und ausgegebenen Getränke mit einem aufgeschäumten, bevorzugt proteinhaltigen Fluid, insbesondere Milch oder Milchersatz, zu ergänzen oder zu verfeinern. Bei den bekannten Getränkezubereitungsvorrichtungen, insbesondere Kaffeevollautomaten, arbeiten die integrierten Schaummodule in der Regel nach dem Prinzip einer Venturi-Düse oder einer Strahlpumpe, bei denen über ein Treibmedium, beispielsweise heißes Wasser oder Dampf, das aufzuschäumende, bevorzugt proteinhaltige, Fluid angesaugt, aufgeschäumt und ebenfalls durch einen Fluidauslass der Getränkezubereitungsvorrichtung ausgegeben wird, um bevorzugt extern zu der Getränkezubereitungsvorrichtung einem Getränkebehälter zugeführt zu werden.

Das Treibmedium wird dabei regelmäßig auch als Wärmeträger genutzt, um das aufzuschäumende Fluid zu erwärmen. Im Stand der Technik sind bereits unterschiedliche Ausgestaltungen von Schaummodulen bekannt. Beispielsweise sind einfache Venturi-Düsen und mehrere Venturi-Düsen - sowohl in Reihe geschaltet als auch parallel geschaltet - bekannt. Durch die unterschiedlichen Ausgestaltungen soll in möglichst vielfältiger Hinsicht auf den jeweils zu erzeugenden Schaum eingewirkt werden, um sowohl im Hinblick auf die Temperatur, Luftgehalt, Konsistenz, Sämigkeit und dergleichen unterschiedliche Schäume zur Verfügung stellen zu können, um damit die Bandbreite der mit der Getränkezubereitungsvorrichtung hergestellten und ausgegebenen Getränke weiter zu erhöhen.

Bei den bisher bekannten Schaummodulen sind insbesondere im Hinblick auf die Temperatur des Schaums, die Konsistenz des Schaums und den Luftgehalt des Schaums bestimmte Grenzen gesetzt. Bei dem Betrieb von Schaummodulen auf der Grundlage einer Venturi-Düse sind im Stand der Technik auch verschiedene Verfahren bekannt, um im Anschluss an einen Betrieb des Schaummoduls das Schaummodul zu spülen und/oder zu reinigen. Dadurch soll vermieden werden, dass das, bevorzugt proteinhaltige, aufzuschäumende Fluid Ablagerungen ausbildet, die die Funktion des Schaummoduls beeinträchtigen und/oder zu hygienisch bedenklichen oder gefährlichen Zuständen führen können.

Aufgrund der verhältnismäßig einfachen Ausgestaltung und weiten Verbreitung von Venturi-Düsen in gattungsgemäßen Schaummodulen ist das Spülen oder Reinigen von bekannten Schaummodulen verhältnismäßig gut beherrschbar.

Neben dem Einsatz von Venturi-Düsen offenbart die DE 10 2007 024 443 A1 ein Verfahren zum Milchschäumen und eine dazugehörige Vorrichtung. Eine poröse Membran, die in der Druckschrift als Stromteiler bezeichnet wird, wird mit Druckluft beaufschlagt, um beim Austreten der Druckluft aus dem Stromteiler Milch in einer Milchkammer aufzuschäumen und somit Milchschaum zu generieren. In einer Ausführungsform ist eine Milchschaumdüse offenbart, welche einen Milcheingang und einen Lufteingang umfasst. Die Luft oder Druckluft strömt dabei von innen nach außen durch den Stromteiler und schäumt beim Austritt aus dem Stromteiler die Milch, welche am Außenumfang des Stromteilers entlang strömt, auf.

Weiterhin lehrt die CH 706 370 A1 ein Verfahren zum Reinigen von milchführenden Leitungen einer Kaffeemaschine und eine Milcheinheit zur Durchführung des Verfahrens. Dabei wird ein Milchbehälter durch einen Reinigungsbehälter ersetzt, aus welchem ein Reinigungsmittel angesaugt und entnommen werden kann. Das Reinigungsmittel wird in einer Flasche bevorratet und automatisiert in den Reinigungsbehälter dosiert. Aus diesem ist es dann im Rahmen eines herkömmlichen Reinigungsablaufs in die milchführenden Leitungen einleitbar.

Aus der EP 2 695 559 A1 ist ein Kaffeevollautomat bekannt, der hinsichtlich einer automatischen und schnellen Reinigung von milchführenden Bauteilen verbessert sein soll.

Die WO 2022 / 218 587 A1 offenbart ein Verfahren zum Reinigen und/oder Desinfizieren und/oder Spülen eines milchführenden Systems einer Kaffeemaschine und eine dazugehörige Reinigungsvorrichtung.

Weiterhin zeigt die EP 1 472 963 B1 eine Einrichtung zur Ausgabe von warmer und/oder kalter Milch und/oder Milchschaum, welche eine einfache und optimale Reinigung ermöglichen soll. Zentral ist dabei eine verstellbare Schlauchquetschpumpe, welche es bevorzugt ermöglicht einen durchgehenden Schlauch als milchführende Leitung zu nutzen.

Dementsprechend ist es die Aufgabe der vorliegenden Erfindung, ein Verfahren zum Betrieb einer Getränkezubereitungsvorrichtung, insbesondere eines Kaffeevollautomaten, mit einem Schaummodul vorzuschlagen, bei dem der Spül- und/oder Reinigungsbetrieb wirkungsvoll und effektiv durchgeführt werden kann und gleichzeitig die Voraussetzung geschaffen wird, um mit dem Schaummodul Schäume in einer größeren Bandbreite, besonders im Hinblick auf Temperatur, Luftgehalt und Konsistenz des Schaums, bereitzustellen.

Diese Aufgabe wird mit einem Verfahren zum Betrieb einer Getränkezubereitungsvorrichtung mit den Merkmalen des Anspruchs 1 gelöst.

Vorteilhafte Ausführungsformen der Erfindung sind Gegenstand der nachfolgenden Beschreibung, der Figurenbeschreibung, der Figuren sowie der Unteransprüche.

Insgesamt sollen alle nachfolgend verfahrensmäßig offenbarten Merkmale auch als entsprechend vorrichtungsmäßig offenbart und beanspruchbar gelten, und umgekehrt.

Die oben genannte Aufgabe wird mit einem Verfahren zum Betrieb einer Getränkezubereitungsvorrichtung, insbesondere eines Kaffeevollautomaten, mit einem Schaummodul umfassend einen Spül- und/oder Reinigungsbetrieb dadurch gelöst, dass der Spül- und/oder Reinigungsbetrieb die nachfolgenden Schritte umfasst:
Durchströmen einer, bevorzugt porösen, Membran des Schaummoduls mit einem Spül- oder Reinigungsfluid von einer ersten Membranoberfläche zu einer zweiten Membranoberfläche und Ableiten des Spül- oder Reinigungsfluids über eine die Membran umgebende Fluidkammer des Schaummoduls zu einem Fluidauslass der Fluidkammer und/oder des Schaummoduls. Erfindungsgemäß handelt es sich bei dem Spül- oder Reinigungsfluid um eine Spül- oder Reinigungsflüssigkeit.

Die vorliegende Erfindung basiert damit einerseits auf dem Grundgedanken, eine, bevorzugt poröse, Membran einzusetzen und diese so in einer Fluidkammer anzuordnen, dass ein Fluid oder Treibfluid, beispielsweise Druckluft, im Betrieb des Schaummoduls von einer ersten Membranoberfläche der Membran auf eine zweite Membranoberfläche der Membran gefördert wird, wobei die zweite Membranoberfläche der Membran so in der Fluidkammer angeordnet ist, dass durch die Fluidkammer gefördertes, aufzuschäumendes, besonders bevorzugt proteinhaltiges Fluid, beispielsweise Milch, im Inneren der Fluidkammer die zweite Membranoberfläche der Membran passiert und dort austretendes Fluid oder Treibfluid in Form von kleinen Fluidblasen oder Gasblasen in das aufzuschäumende Fluid aufnimmt/inkorporiert und entsprechend ausgangsseitig, beispielsweise an einem Fluidauslass der Fluidkammer, in einem entsprechend aufgeschäumten Zustand ausgegeben wird. Dies ermöglicht für den Betrieb der Getränkezubereitungsvorrichtung einen erheblichen Zugewinn an Möglichkeiten der Schaumherstellung, insbesondere im Hinblick auf die unterschiedlichen, oben bereits genannten Eigenschaften oder Charakteristika des jeweiligen Schaums. Gleichzeitig stellt diese Ausgestaltung des Schaummoduls und der Betrieb des Schaummoduls besondere Anforderungen an einen Spül- und/oder Reinigungsbetrieb des Schaummoduls.

Die Erfindung hat in diesem Zusammenhang in überraschender Weise erkannt, dass durch ein Durchspülen der Membran von einer ersten Membranoberfläche zu einer zweiten Membranoberfläche und ein entsprechendes Ableiten des Spül- oder Reinigungsfluids über die Fluidkammer und deren Fluidauslass in besonders effektiver Weise die Bildung von Ablagerungen, Verschmutzungen und/oder die Ansammlung von Fluidresten in oder an der Membran besonders effektiv verhindert werden kann.

Die Erfindung wird in der nachfolgenden Beschreibung hauptsächlich in Bezug oder zusammen mit einem Kaffeevollautomaten als Getränkezubereitungsvorrichtung beschrieben. Dies stellt aber nur eine bevorzugte und optionale Ausgestaltung dar. Als Getränkezubereitungseinrichtung kann beispielsweise auch eine Kapselkaffeemaschine dienen, bei der dann ein Schaummodul, womöglich mit samt der Membran, abnehmbar oder entnehmbar ausgebildet sein kann. Die Getränkezubereitungseinrichtung kann auch andere Typen und Klassen umfassen, wie beispielsweise Siebträger-Kaffeemaschinen, Milchshakebereiter oder dergleichen. In einer extremen Ausgestaltungsform kann auch das Schaummodul dies wesentliche Getränke-Komponente der Getränkezubereitungseinrichtung darstellen. In diesem Fall könnte die Getränkezubereitungseinrichtung als Stand-Alone-Milchschäumer bezeichnet werden.

Die Membran kann teilweise oder vollständig als Begrenzung eines Membrankörpers dienen. Dieser kann beispielsweise zylindrisch sein oder die Form eines Kegelstumpfes aufweisen. In diesem Fall kann die erste Membranoberfläche eine Innenoberfläche oder einen Teil einer Innenoberfläche der Membran ausbilden. Gleichermaßen kann bei einer derartigen Ausgestaltung die zweite Membranoberfläche eine Außenoberfläche oder einen Teil einer Außenoberfläche des Membrankörpers ausbilden.

Die Bereitstellung des Spül- oder Reinigungsfluids kann auf grundsätzlich unterschiedliche Weise erfolgen. Auf besonders vorteilhafte Möglichkeiten wird in der folgenden Beschreibung noch eingegangen werden. Dem Grunde nach besteht der Erfindungsgedanke aber darin, dass das Spül- oder Reinigungsfluid wenigstens zeitweise oder übergangsweise so an die Membran heran gefördert oder der Membran zur Verfügung gestellt wird, dass das Spül- oder Reinigungsfluid in gleicher Richtung wie das Treibfluid während des gewöhnlichen Betriebs des Schaummoduls von der ersten Membranoberfläche zur zweiten Membranoberfläche gefördert wird, auch oder gerade wenn das Treibfluid, welches in der Benutzung des Schaummoduls zum Einsatz kommt, und das Spül- oder Reinigungsfluid unterschiedliche Fluide sind und sogar unterschiedliche Aggregatszustände aufweisen. Denn vorteilhaft kann das Treibfluid ein Gas oder Aerosol, wie beispielsweise Luft, sein, wohingegen das Spül- oder Reinigungsfluid eine Flüssigkeit, bevorzugt Wasser, ggf. mit einem Reiniger- und/oder Tensidanteil, ist.

Damit wird in erfindungsgemäßer Art und Weise beim Spül- und/oder Reinigungsbetrieb ein anderes flüssiges Spül- oder Reinigungsfluid durch die Membran gefördert, nämlich von der ersten Membranoberfläche zur zweiten Membranoberfläche, wobei im sonstigen Betrieb des Schaummoduls und insbesondere der Membran auf dem besagten Weg oder Fluidpfad ansonsten ein, bevorzugt gasförmiges, Treibfluid die Membran passiert.

In einer ersten vorteilhaften Ausführungsform des Verfahrens kann vorgesehen sein, dass das Spül- oder Reinigungsfluid über einen Fluidanschluss der Membran zugeführt wird, und über den Fluidanschluss in ein wenigstens teilweise von der ersten Membranoberfläche begrenztes Volumen gelangt. Das Volumen kann beispielsweise als Innenvolumen ausgestaltet sein, wenn die Membran eine solches Innenvolumen umschließt oder teilweise begrenzt. Wenn die Membran eine andere Form aufweist, kann das Volumen auch eine andere Form oder Ausgestaltung annehmen. Das Volumen grenzt aber in jedem Fall an die Membran an und sorgt dafür, dass das Treibfluid über die Membran und deren Oberfläche verteilt wird, bevor es die Membran passiert. Dies kann einerseits besonders vorteilhaft dazu führen, dass das Spül- oder Reinigungsfluid bei dem anschließenden Austrag oder der Förderung von der ersten Membranoberfläche zur zweiten Membranoberfläche das gesamte Volumen der Membran durchdringt oder durchströmt. Die Zuführung kann beispielsweise über ein Mehrwege-Ventil realisiert werden, welches in der Lage ist, ein Spül- oder Reinigungsfluid an einem Fluidanschluss der Membran zur Verfügung zu stellen. Bevorzugt kann in dem dazugehörigen Fluidpfad von dem Mehrwege-Ventil zu dem Fluidanschluss der Membran eine Abzweigung realisiert sein, die fluidleitend mit einer Fluidpumpe, insbesondere einer Luftpumpe, verbunden ist. Die Fluidpumpe, insbesondere Luftpumpe, kann bevorzugt im Betrieb des Schaummoduls genutzt werden, um das Treibfluid, bevorzugt Luft oder Druckluft, ebenfalls an dem Fluidanschluss der Membran zur Verfügung zu stellen.

In einer weiteren, besonders bevorzugten Weiterbildung des Verfahrens kann vorgesehen sein, dass das Spül- oder Reinigungsfluid über ein Treibfluid von der ersten Membranoberfläche zur zweiten Membranoberfläche gefördert wird, wobei das Treibfluid, bevorzugt in Form von Druckluft oder Luft, über den Fluidanschluss bereitgestellt wird.

Wie vorangehend bereits beschrieben kann auf diese Art und Weise besonders vorteilhaft die Struktur oder die baulichen Einrichtungen der Getränkezubereitungsvorrichtung, die auch für den Betrieb des Schaummoduls genutzt werden, für den Spül- und/oder Reinigungsbetrieb genutzt oder mitbenutzt werden. Denn nachdem das Spül- oder Reinigungsfluid auf der ersten Membranoberfläche zur Anlage gebracht ist oder in einem Volumen, bevorzugt einem Innenvolumen, der Membran eingeführt, insbesondere eingefüllt, ist, kann mit demselben Treibfluid, bevorzugt über dieselbe Fluidpumpe, die auch im Betrieb des Schaummoduls einen Fluidfluss des Treibfluids durch die Membran, insbesondere von der ersten Membranoberfläche zur zweiten Membranoberfläche, bereitstellt, das Spül- oder Reinigungsfluid durch die Membran gefördert, insbesondere gepresst, werden.

Gemäß einer weiteren, besonders vorteilhaften Ausgestaltung des Verfahrens kann vorgesehen sein, dass das Spül- oder Reinigungsfluid über einen Fluideinlass der Fluidkammer zugeführt wird und zumindest ein Teil des Spül- oder Reinigungsfluids zunächst von der zweiten Membranoberfläche zur ersten Membranoberfläche gefördert oder befördert wird.

Diese Ausgestaltung des Verfahrens hat den Vorteil, dass eine fluidleitende Verbindung zwischen dem Fluideinlass der Membran und Quellen oder Bezugspunkten zur Verfügungstellung oder zur Bereitstellung des Spül- oder Reinigungsfluids nicht vorgesehen werden müssen. Da die entsprechende, oben bereits beschriebene fluidleitende Verbindung für den Betrieb des Schaummoduls nicht oder zumindest nicht zwingend erforderlich ist, kann dadurch eine Leitung oder eine Verbindung und ggf. entsprechende Infrastruktur auf Seiten eines Mehrwege-Ventils eingespart werden. In dieser Ausgestaltung des Verfahrens wird dann, wie nachfolgend noch genauer beschrieben, das Spül- oder Reinigungsfluid, beispielsweise über eine entsprechende Fluidzuleitung oder Zuleitung, zunächst einem Fluidzufluss der Fluidkammer zur Verfügung gestellt und strömt von dort aus in die Fluidkammer ein. Durch die vorteilhafte Überführung eines Teils des Spül- oder Reinigungsfluids von der zweiten Membranoberfläche und damit von der Fluidkammer zur ersten Membranoberfläche kann auch ohne eine entsprechende Zuleitung oder indirekt/mittelbar das Spül- oder Reinigungsfluid auf die Innenseite oder an die erste Membranoberfläche gelangen oder gefördert werden. Nach dieser indirekten oder mittelbaren Einführung von Spül- oder Reinigungsfluid an die erste Membranoberfläche oder in einem Volumen, bevorzugt einem Innenvolumen, der Membran kann dann vorteilhaft - wie vorangehend bereits beschrieben - eine entsprechend umgekehrte Förderung des Spül- oder Reinigungsfluids erfolgen, die dazu führt, dass das Spül- oder Reinigungsfluid abermals von der ersten Membranoberfläche de zur zweiten Membranoberfläche geführt wird und von dort aus über die Fluidkammer abgeführt werden kann.

Die beiden in entgegengesetzter Richtung durchgeführten Durchquerungen der Membran seitens des Spül- oder Reinigungsfluids können vorteilhaft über eine Fluidpumpe, insbesondere über eine Luftpumpe, besonders bevorzugt über ein und dieselbe Luftpumpe, bewirkt werden. Dabei kann vorteilhaft zum Ansaugen oder Überführen des Spül- oder Reinigungsfluids aus der Fluidkammer in die Membran oder zur ersten Membranoberfläche die Fluidpumpe, insbesondere Luftpumpe, einen Unterdruck im Inneren oder auf der ersten Membranoberfläche herstellen. Umgekehrt kann zum Austreiben des Spül- oder Reinigungsfluids durch eine umgekehrte oder reversierte Pumpleistung die Fluidpumpe einen Überdruck auf der ersten Membranoberfläche oder im Inneren der Membran herstellen, sodass das Spül- oder Reinigungsfluid wieder von der ersten Membranoberfläche zur zweiten Membranoberfläche gefördert wird.

Dementsprechend sieht eine weitere vorteilhafte Ausführungsform des Verfahrens vor, dass über einen Fluidanschluss, der fluidleitend mit einem Volumen, bevorzugt einem Innenvolumen, der Membran verbunden ist, eine negative Druckdifferenz zur Fluidkammer, bevorzugt über eine Fluidpumpe, hergestellt wird, sodass das Spül- oder Reinigungsfluid aus der Fluidkammer über die zweite Membranoberfläche zu der ersten Membranoberfläche und von dort aus in das Volumen, insbesondere Innenvolumen, gelangt, bevor über den Fluidanschluss eine positive Druckdifferenz, bevorzugt durch die gleiche Fluidpumpe, gegenüber der Fluidkammer hergestellt wird, sodass das in dem Volumen, bevorzugt Innenvolumen, befindliche Spül- oder Reinigungsfluid von der ersten Membranoberfläche zu der zweiten Membranoberfläche gefördert wird.

In einer weiteren, vorteilhaften Ausführungsform des Verfahrens kann zudem vorgesehen sein, dass ein Treibfluid, bevorzugt über eine schaltbare Verbindung, über eine mit dem Fluideinlass verbundene Fluidzuleitung oder Zuleitung in die Fluidkammer eingebracht wird und bei der Beaufschlagung der Zuleitung mit Treibfluid die sonstigen Fluide in der Zuleitung entleert und/oder die Zuleitung entlüftet wird.

Aus Gründen der Einfachheit wird nachfolgend die Fluidzuleitung, die im Betrieb des Schaummoduls einen Milchbehälter mit der Fluidkammer verbindet verkürzt auch als Zuleitung tituliert.

Der Betrieb der Getränkezubereitungsvorrichtung mit einem Membran-Schaummodul führt in den allermeisten Fällen zu einer Fluidpumpe zur Bereitstellung des Treibfluids für den Betrieb des Schaummoduls. Dies kann besonders vorteilhaft auch für den Spül- und/oder Reinigungsbetrieb der Getränkezubereitungsvorrichtung genutzt werden. Beispielsweise wird in der vorangehend dargestellten Ausführungsform das Treibfluid, welches im Betrieb grundsätzlich die Membran durchqueren und auf einer zweiten Membranoberfläche in das aufzuschäumende Fluid aufgenommen oder inkorporiert werden soll, im Spül- und/oder Reinigungsbetrieb auch einer Zuleitung zu dem Fluideinlass der Fluidkammer zur Verfügung gestellt oder die Zuleitung mit dem Treibfluid beaufschlagt, um die besagte Zuleitung oder wenigstens einen Teil der Zuleitung nach oder abströmseitig zu einer entsprechenden Einkoppelstelle für das Treibfluid zu entleeren und/oder zu entlüften. Die sonstigen Fluide können dabei durch das aufzuschäumende Fluid, beispielsweise Milch, und/oder durch Spül- oder Reinigungsfluid gebildet sein.

Dadurch wird erreicht, dass auch vor dem Schaummodul in der Zuleitung des aufzuschäumenden, bevorzugt proteinhaltigen, Fluids eine effektive und zuverlässige Spülung, Reinigung und Entlüftung möglich wird. Besonders bevorzugt kann die Ausgestaltung der Getränkezubereitungsvorrichtung dabei so sein, dass die Leitung oder fluidleitende Verbindung, die das Zuführen oder Bereitstellen von Treibfluid in die Zuleitung oder in einen Teil der Zuleitung ermöglicht, im Betrieb der Getränkezubereitungsvorrichtung und insbesondere im Betrieb des Schaummoduls genutzt werden kann, um ein Wärmetauschfluid, bevorzugt Heißwasser oder Wasserdampf, in die Zuleitung einzuspeisen. Im Spül- und/oder Reinigungsbetrieb des Schaummoduls kann die besagte Zuleitung auch zunächst dazu genutzt werden, um Spül- oder Reinigungsfluid, beispielsweise Wasser, in die Zuleitung zu fördern und durch eine entsprechende variable Beschaltung anschließend genutzt werden, um das Treibfluid in die Zuleitung zu fördern. Dadurch wird in vorteilhafter Weise erreicht, dass die Fluidkammer mit Spül- oder Reinigungsfluid beaufschlagt und durchspült werden kann, wobei anschließend die Zuleitung und auch die Fluidkammer ausgeblasen oder von Restfluiden befreit und/oder entlüftet werden kann, sodass auch nach dem Spül- oder Reinigungsbetrieb keine oder nur minimale Mengen an Restfluiden in der Zuleitung und/oder im Schaummodul zurückbleiben.

Weiterhin kann vorteilhaft vorgesehen sein, dass das Treibfluid, bevorzugt über eine schaltbare Verbindung, in eine Fluidzuleitung in Richtung eines Milchbehälters eingebracht wird und bei der Beaufschlagung der Fluidzuleitung mit Treibfluid die sonstigen Fluide in der Zuleitung entleert und/oder die Zuleitung entlüftet wird. Dies kann bevorzugt zusammen mit einer Umkehr der Förderrichtung der Förderpumpe stattfinden, so dass das Treibfluid zusätzlich oder alternativ zum Ausblasen der Fluidkammer auch in umgekehrter Richtung einen anderen oder gegenüberliegenden Teil der Fluidzuleitung ausblasen kann.

Vorteilhaft kann vorgesehen sein, dass das Treibfluid vor dem Durchströmen der Membran des Schaumoduls mit einem Spül- oder Reinigungsfluid eingebracht wird. Dadurch werden, unabhängig von der Seite/Richtung in welche das Treibfluid strömt, zunächst Reste von Milch oder Milchschaum ausgeblasen und ausgetragen, bevor Spül- oder Reinigungsfluid eingebracht wird. Damit wird aber auch die Menge und die Konzentration an Spül- oder Reinigungsfluid verringert, da ein Teil des Milchschaums oder der Milch aus den beteiligten Leitungen und Bauteilen bereits entleert wurde. Auch kann dadurch der Spül- oder Reinigungsprozess beschleunigt werden.

Vorteilhaft kann vorgesehen sein, dass das Einbringen von Treibfluid in die Fluidzuleitung und/oder die Fluidkammer bereits nach einem Getränkebezug erfolgt, so dass zwischen einem Getränkebezug und dem restlichen Spül- oder Reinigungsbetrieb möglichst keine Milch oder Milchschaum in den milchführenden Komponenten verbleibt oder zurückbleibt, so dass durch das anschließende Einbringen von Spül- oder Reinigungsfluid nur noch minimale Reste an Milch oder Milchschaum beseitigt werden müssen.

In einer weiteren, besonders vorteilhaften Ausgestaltung des Verfahrens kann alternativ oder zusätzlich vorgesehen sein, dass nach dem Durchströmen der Membran des Schaummoduls mit einem Spül- oder Reinigungsfluid ein Treibfluid über einen Fluidanschluss der Membran von der ersten Membranoberfläche zur zweiten Membranoberfläche gefördert wird und dabei sonstige Fluide innerhalb der Membran und/oder im Volumen oder Innenvolumen der Membran entleert werden. Wie auch im Hinblick auf die Fluidkammer kann dadurch besonders vorteilhaft sichergestellt werden, dass keine Restfluide, weder das aufzuschäumende Fluid noch das Spül- oder Reinigungsfluid, auf der ersten Membranoberfläche oder im Volumen, insbesondere Innenvolumen, der Membran zurückbleibt. Die Förderung des Treibfluids durch die Membran im Spül- und/oder Reinigungsbetrieb der Getränkezubereitungsvorrichtung kann besonders effektiv und einfach realisiert werden, wenn das Treibfluid das gleiche Treibfluid ist, das auch beim Betrieb des Schaummoduls genutzt wird und über die gleichen Teile der Vorrichtung, beispielsweise eine Luftpumpe, bereitgestellt wird. Besonders vorteilhaft kann beispielsweise das Treibfluid entsprechend lange durch den Fluidanschluss in die Membran oder an die erste Membranoberfläche strömen, sodass darüber zunächst das Spül- oder Reinigungsfluid ausgetragen und anschließend die Entlüftung sowie die Entfernung von Restfluiden oder sonstigen Fluiden bewirkt wird.

In einer weiteren, besonders bevorzugten Ausgestaltung des Verfahrens kann weiterhin vorgesehen sein, dass das Spül- oder Reinigungsfluid von einem Fluidauslass der Fluidkammer, bevorzugt über eine lösbare Kopplungsleitung, über einen Anschluss für einen Milchbehälter und die Zuleitung zum Fluideinlass der Fluidkammer zirkuliert wird. Dies hat den Vorteil, dass mit einem minimalen Einsatz von Spül- oder Reinigungsfluid eine mehrfache Spülung der Fluidkammer und ggf. der zweiten Membranoberfläche erreicht werden kann. Dazu muss lediglich in Vorbereitung auf den Spül- oder Reinigungsbetrieb der Milchbehälter an einem vorgesehenen Anschluss entfernt und eine Kopplungsleitung zwischen dem Fluidauslass der Fluidkammer und dem Anschluss für den Milchbehälter befestigt werden. Die Zirkulation des Spül- oder Reinigungsfluids kann bevorzugt über die Fluidpumpe, insbesondere Milchpumpe, realisiert werden, die bei einem an dem Anschluss für den Milchbehälter angedockten Milchbehälter auch die Förderung der Milch oder des sonstigen aufzuschäumenden, insbesondere proteinhaltigen, Fluids bewirkt oder bewirken würde.

In einer weiteren, besonders bevorzugten Ausführungsvariante des Verfahrens kann vorgesehen sein, dass das Spül- oder Reinigungsfluid durch eine Förderpumpe, bevorzugt eine Rollenpumpe, nacheinander in die Zuleitung zum Fluideinlass der Fluidkammer und von dort aus in die Fluidkammer sowie, insbesondere bei einer umgekehrten Förderrichtung der Förderpumpe, in die Zuleitung zum Fluideinlass der Fluidkammer und von dort aus zu einem Anschluss für einen Milchbehälter gefördert wird. Die Reihenfolge ist dabei beliebig umkehrbar. Das heißt, dass das Spül- oder Reinigungsfluid auch zuerst zum Anschluss des Milchbehälters gefördert werden kann und dann, bevorzugt durch eine Änderung der Pumprichtung der Förderpumpe, durch die Zuleitung zum Fluideinlass und damit in die Fluidkammer und/oder durch die Fluidkammer gefördert werden kann.

Dies ermöglicht in besonders vorteilhafter Weise ein Spülen oder Reinigen der gesamten Zuleitung zum Schaummodul, insbesondere zur Fluidkammer, die im Betrieb die aufzuschäumende, bevorzugt proteinhaltige Flüssigkeit fördert, sodass eine vollständige Spülung vom Anschluss für den Milchbehälter auf der einen Seite bis zu dem Eintritt in die Fluidkammer und darüber hinaus sogar bis zum Austritt aus der Fluidkammer ermöglicht wird.

Gemäß einer weiteren, vorteilhaften Ausgestaltung des Verfahrens kann vorgesehen sein, dass zu Beginn eines Spül- oder Reinigungsbetriebs die Zuleitung zur Fluidkammer oder zum Fluideinlass der Fluidkammer entleert wird, indem eine mit der Zuleitung verbundene Förderpumpe so betrieben wird, dass in der Zuleitung befindliches Fluid in Richtung eines Anschlusses für einen Milchbehälter und ggf. in einen im Anschluss für den Milchbehälter angeordneten Milchbehälter gefördert wird. Dies hat den Vorteil, dass die Zuleitung bereits weitgehend entleert ist, bevor der Spül- und/oder Reinigungsbetrieb begonnen wird. Dies erleichtert das Spülen oder Reinigen der Zuleitung und erlaubt daher eine Reinigung oder ein Spülen der Zuleitung mit einem Mindestmaß oder einem Mindestvolumen an eingesetztem Spül- oder Reinigungsfluid.

Sofern an dem Anschluss für den Milchbehälter kein Milchbehälter angeordnet ist, kann alternativ auch vorgesehen sein, dass die noch in der Zuleitung befindliche Milch oder ein entsprechender Milchersatz in einen Auffangbehälter, beispielsweise eine Tropfschale der Getränkezubereitungsvorrichtung, ausgegeben oder abgelassen wird.

Nachfolgend werden vorteilhafte Ausführungsformen des erfindungsgemäßen Verfahrens anhand von Ausführungsbeispiele zeigenden, rein schematischen Zeichnungen erläutert.

Darin zeigen:
- Fig. 1:: ein grundsätzliches Fluidschema einer Getränkezubereitungsvorrichtung zum Betrieb mit dem erfindungsgemäßen Verfahren;
- Fig. 2:: ein beispielhaftes Fluidschema einer Getränkezubereitungsvorrichtung zur Erläuterung eines erfindungsgemäßen Spülbetriebs;
- Fig. 3:: ein beispielhaftes Fluidschema einer Getränkezubereitungsvorrichtung zur Erläuterung eines erfindungsgemäßen Reinigungsbetriebs.

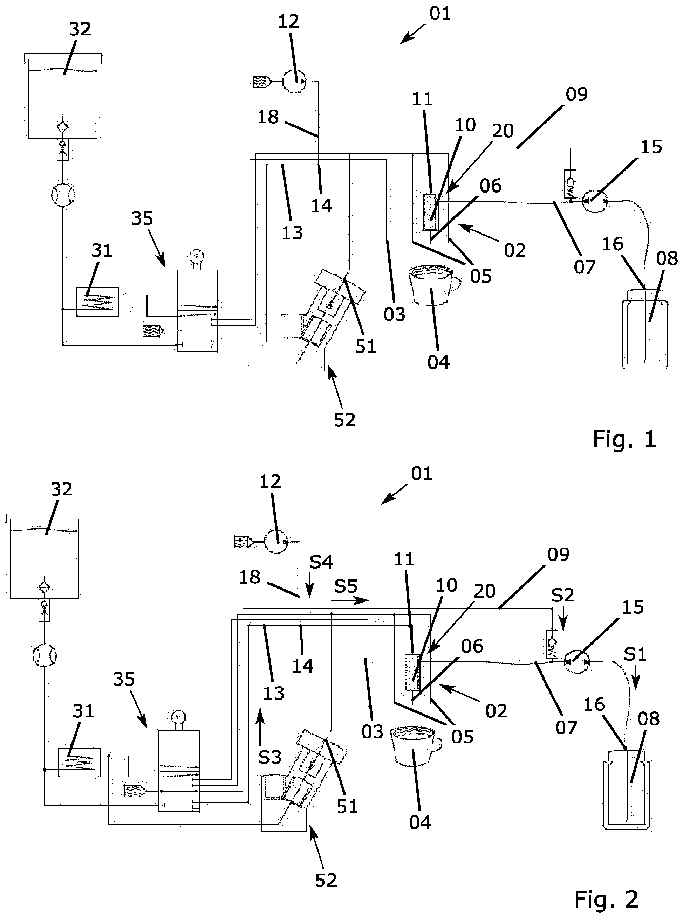

Die Fig. 1 zeigt ein beispielhaftes, grundlegendes Fluidschema einer Getränkezubereitungsvorrichtung zur Ausführung des erfindungsgemäßen Verfahrens. Bei einer gattungsgemäßen Getränkezubereitungsvorrichtung 01 besteht oftmals die Möglichkeit zur Ausgabe von erhitztem Wasser, über einen Heißwasserauslauf 03, der fluidtechnisch mit einem Heißwasserbereiter 31, beispielsweise einem Thermoblock, verbunden ist, der wiederum über einen Frischwasseranschluss der Getränkezubereitungsvorrichtung oder einem Frischwassertank 32 der Getränkezubereitungsvorrichtung fluidtechnisch angeschlossen sein kann, gespeist wird.

Über den Heißwasserauslauf 03 kann heißes Wasser in einem unter dem Ausgabemodul 02 angeordneten Getränkebehälter 04 ausgegeben werden. Über ein Mehrwege-Ventil 35 kann durch die jeweilige Beschaltung oder Stellung des Mehrwege-Ventils 35 das im Frischwassertank 32 bevorratete Wasser in einem erwärmten Zustand, nach Passieren des Heißwasserbereiters 31, oder in einem unerwärmten Zustand neben dem Heißwasserauslauf 03 auch an verschiedene andere Leitungen oder fluidtechnische Verbindungen der Getränkezubereitungsvorrichtung 01 ausgegeben oder abgegeben werden. Das Mehrwege-Ventil 35 kann auch weitere Fluidverbindungen der Getränkezubereitungsvorrichtung 01 flexibel öffnen/schließen und/oder verbinden/trennen, wie nachfolgend noch beschrieben werden wird.

Die Getränkezubereitungsvorrichtung 01 umfasst zwei Brühkammerausläufe 05, die fluidtechnisch mit dem Ausgang 51 oder Auslauf einer Brüheinheit 52 verbunden sind, in der ein Getränk, beispielsweise eine Kaffeespezialität, aus heißem oder kaltem Wasser und Getränkesubstrat, beispielsweise Kaffeebohnenmehl, aufgebrüht oder ausgelaugt wird. Über die Brühkammerausläufe 05 kann ebenfalls ein entsprechendes Getränk in den Getränkebehälter 04 ausgegeben werden.

Weiterhin umfasst das Ausgabemodul 02 einen Milch- und/oder Schaumauslauf 06. Der Milch- und/oder Schaumauslauf 06 ist beispielsweise über eine trennbare Fluidzuleitung 07 mit einem Milchbehälter 08 verbunden, wobei in die Fluidzuleitung 07 eine weitere Hilfszuleitung 09 münden kann. Die Hilfszuleitung 09 kann verschiedene Funktionen erfüllen und verschiedene Fluide führen, wie nachfolgend noch im Detail beschrieben werden wird.

Im Betrieb der Getränkezubereitungsvorrichtung 01, insbesondere im Betrieb des Schaummoduls 20 zur Herstellung und Ausgabe eines aufgeschäumten Fluids, insbesondere Milch, kann die Hilfszuleitung 09 bevorzugt dazu genutzt werden, um Heißwasser oder Dampf in die Fluidzuleitung 07 einzuspeisen, um dadurch das aus dem Milchbehälter 08 geförderte Fluid, insbesondere die geförderte Milch, zu erwärmen. Diese Funktion kann alternativ auch über eine Wärmetauschvorrichtung in Wirkverbindung mit der Fluidzuleitung 07 gewährleistet werden, die ggf. nur Wärme überträgt, ohne dass eine Durchmischung oder ein Zusatz mit einem Fluid, beispielsweise Heißwasser oder Wasserdampf, erfolgt.

Bei der Getränkezubereitungsvorrichtung 01, die mit dem erfindungsgemäßen Verfahren betrieben wird, ist dem Milch- und/oder Schaumauslass 06 vorgeschaltet eine Membran 10 angeordnet, die in einer in der Fig. 1 nicht im Detail dargestellten Fluidkammer befindlich ist oder von dieser Umschlossen wird. Über einen Fluidanschluss 11 kann die Membran mit einem zu Aufschäumzwecken verwendeten Fluid oder Treibfluid, bevorzugt Druckluft, versorgt werden, wozu beispielsweise eine als Luftpumpe 12 ausgebildete Fluidpumpe Luft ansaugt, komprimiert und über eine Leitung 13 dem Fluidanschluss 11 zur Verfügung stellt. Ausgehend vom Fluidanschluss 11 kann die beispielhafte Druckluft die Membran 10 von einer ersten Membranoberfläche zu einer zweiten Membranoberfläche durchströmen, wobei die zweiten Membranoberfläche so innerhalb oder gegenüber der Fluidkammer angeordnet ist, dass die Druckluft ein in die Fluidkammer gefördertes Fluid, beispielsweise über die Fluidzuleitung 07 bereitgestellte kalte, warme oder heiße Milch, durchströmt und entsprechende Fluidblasen, insbesondere Gasblasen, des Treibfluids in das durch die Fluidkammer geförderte Fluid aufgenommen werden. Eine Besonderheit der Membran 10 besteht gerade darin, dass ein Aufschäumen auch ohne eine Erwärmung des Fluids oder der Milch stattfinden kann. Es können aber über den Einsatz der Membran 10 auch in anderer Hinsicht Schäume erzeugt werden, die mit einer Venturi-Düse nicht bereitgestellt werden können.

Die Membran 10 kann beispielsweise als Sinterkörper aus metallischem Werkstoff, bevorzugt mit einer entsprechend definierten Porosität, ausgestaltet sein, sodass beim Durchströmen der Druckluft von einer ersten Membranoberfläche der Membran 10 zu einer zweiten Membranoberfläche der Membran 10 an der zweiten Membranoberfläche entsprechend viele kleine Fluidströme erzeugt werden, die dann von dem Fluid, beispielsweise der Milch, in der Fluidkammer abgerissen oder mittransportiert werden und dabei das aus der Membran ausströmende Fluid, beispielsweise Luft, in das die Fluidkammer durchströmende Fluid, beispielsweise Milch, aufnehmen und dieses dadurch aufschäumen. Die Membran 10 kann beispielsweise die Form eines Kegelstumpfes aufweisen, in dessen Inneren die erste Membranoberfläche und/oder eine Innenoberfläche der Membran 10 ausgebildet ist.

Zwischen der Luftpumpe 12 und dem Fluideinlass 11 kann eine Kreuzung 14 mit einer ebenfalls am Fluideinlass 11 endenden Zuleitung 18 vorgesehen sein, die beispielsweise kaltes Wasser oder erwärmtes/erhitztes Wasser aus dem Frischwassertank 32 zum Fluideinlass 11 und damit zur Membran 10 oder zur ersten Membranoberfläche der Membran 10 fördert.

Über das Mehrwege-Ventil 35 kann zudem erreicht werden, dass Luft von der Luftpumpe 12 in die Hilfszuleitung 09 gelangt.

In der Fig. 2 ist beispielhaft mit einem entsprechenden Verweis auf die jeweiligen Komponenten oder genutzten Leitungen der Getränkezubereitungsvorrichtung 01 ein erfindungsgemäßer Ablauf eines Spülbetriebs skizziert. In einem ersten Verfahrensschritt S1 kann beispielsweise vorgesehen sein, dass über die Förderpumpe 15, die bevorzugt als Schlauchquetschpumpe oder Rollenpumpe ausgebildet ist, durch einen rückwärtsgerichteten Betrieb in der Fluidzuleitung 07 befindliches Fluid, beispielsweise Milch oder Milchersatz, zurück in Richtung des Milchbehälters 08 gefördert wird. In einem weiteren Schritt S2, bei dem vorteilhaft der Milchbehälter 08 mit dem entsprechenden Milchanschluss 16 verbunden bleiben kann, kann über die Hilfszuleitung 09 Wasser oder heißes Wasser zum Spülen in die Fluidzuleitung 07 eingeführt werden. Dadurch wird die Fluidzuleitung 07 jenseits der Förderpumpe 15 im Verfahrensschritt S2 gespült.

In einem nächsten Verfahrensschritt S3 kann an dem Fluidanschluss 11 Wasser bereitgestellt werden, das dann in ein Volumen das wenigstens teilweise an die Membran angrenzt, bevorzugt ein Innenvolumen, das von der Membran teilweise umschlossen wird oder an die erste Membranoberfläche der Membran 10 gelangt. Dies kann über die weitere Leitung 13 erfolgen und stellt einen beispielhaften Verfahrensschritt S3 dar.

In einem nachfolgenden Verfahrensschritt S4 wird über die Luftpumpe 12 Treibfluid, insbesondere auf die weitere Zuleitung 18 und damit auf den Fluidanschluss 11 und die Membran 10, beaufschlagt, sodass das dann im an die Membran angrenzenden Volumen, bevorzugt Innenvolumen, oder an der ersten Membranoberfläche der Membran 10 befindliche Spülfluid, bevorzugt Wasser oder heißes Wasser, von der ersten Membranoberfläche der Membran 10 auf die zweite Membranoberfläche der Membran 10 befördert, insbesondere gepresst, wird und an der zweiten Membranoberfläche der Membran 10 austritt. Von dort aus gelangt das Spülfluid in die Fluidkammer und kann über einen Auslass der Fluidkammer zum Schaumauslauf 06 des Schaummoduls 20 gelangen und von dort aus in einen Auffangbehälter oder eine Tropfschale überführt werden.

Die Beaufschlagung mit Treibfluid, bevorzugt Druckluft, kann in einer vorteilhaften Ausgestaltung solange beibehalten werden, bis nicht nur das Spülfluid aus der Membran 10 oder von der ersten Membranoberfläche der Membran 10 zur zweiten Membranoberfläche der Membran 10 gefördert wurde, sondern auch darüber hinaus, sodass anschließend an das Spülen der Membran 10 auch ein Ausblasen der Membran 10 und damit ein Entleeren von Fluidresten stattfindet.

In einem nachfolgenden, vorteilhaften Verfahrensschritt S5 wird mit dem Mehrwege-Ventil 35 die Luftpumpe 12 so über die Hilfszuleitung 09 mit der Fluidzuleitung 07 verbunden, dass Reste des Spülfluids und ggf. Reste des aufzuschäumenden Fluids, beispielsweise der Milch, ebenfalls ausgeblasen und die entsprechenden Fluide entfernt werden. Die mit der Druckluft ausgeblasenen Fluide können abermals über die Fluidkammer zum Schaumauslauf 06 geführt werden und dort in einen Behälter oder eine Tropfschale abgegeben werden.

Grundsätzlich ist es die Reihenfolge der Beaufschlagung der Membran 10 oder des Volumens, insbesondere Innenvolumens, der Membran 10 mit Druckluft und der Fluidzuleitung 07 mit Druckluft nicht zwingend wie vorangehend beschrieben. Es kann auch umgekehrt zunächst die Fluidzuleitung 07 gespült und ausgeblasen werden, bevor dann die Membran 10 ausgeblasen wird. Dabei kann grundsätzlich auch schon zu einem früheren Zeitpunkt das Spülfluid in die Membran 10 eingebracht worden sein, so dass es an der ersten Membranoberfläche der Membran 10 anliegt. Dadurch kann beispielsweise ein kurzes, aber dennoch wirksames Einweichen der Membran mit Spülfluid erreicht werden.

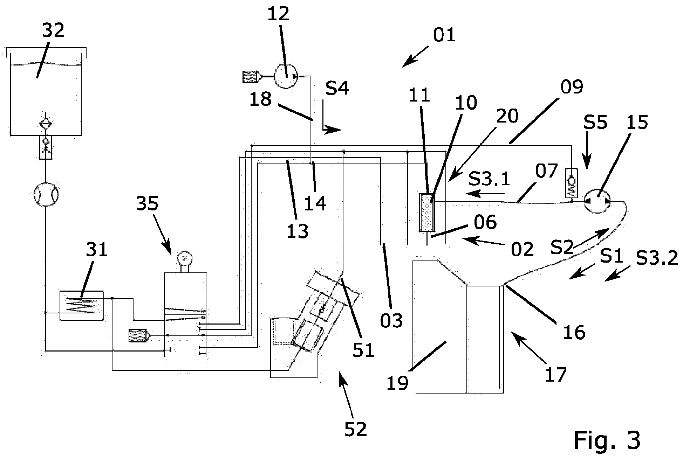

Die Fig. 3 zeigt eine alternative Verfahrensführung zur Durchführung eines erfindungsgemäßen Reinigungsbetriebs der Getränkezubereitungsvorrichtung 01. In diesem Reinigungsbetrieb kann vorgesehen sein, dass der Milchbehälter 08 entfernt ist und an dem Milchanschluss 16 ein Reinigungsgefäß 17 angeordnet ist, was einerseits zur Bevorratung von frischem Reinigungsfluid vorgesehen ist, wobei der Vorrat von frischem Reinigungsfluid mit dem Milchanschluss 16 verbunden ist und wobei das Reinigungsgefäß 17 zudem einen Aufnahmebehälter 19 oder Auffangbehälter aufweist, mit dem benutztes oder verbrauchtes Reinigungsfluid aufgenommen werden kann.

In einem ersten Verfahrensschritt S1, der ggf. noch stattfinden kann, bevor der Milchbehälter 08 abgekoppelt und durch das Reinigungsgefäß 17 ersetzt wird, können abermals durch einen Rückwärtsbetrieb der Förderpumpe 15 aus Richtung des Schaummoduls 20 zurück zum Milchbehälter 08 Reste von der in der Fluidzuleitung 07 befindlichen Fluiden zurück in den Milchbehälter 08 gefördert werden.

In einem nachfolgenden Verfahrensschritt S2 kann dann vorgesehen sein, dass Reinigungsfluid, beispielsweise eine tensidhaltige Wasserlösung, ggf. mit entsprechenden Zusätzen zur Auflösung, Ablösung oder Entfernung von proteinhaltigen Ablagerungen oder entsprechenden Ablagerungen mit denaturiertem Protein, über die Förderpumpe 15 und die Fluidzuleitung 07 bis zur Fluidkammer und durch die Fluidkammer bis zum Schaumauslauf 06 gepumpt werden. Beispielsweise können zwei Zyklen vorgesehen sein, in denen das Reinigungsfluid so vom Reinigungsgefäß 17 bis zum Schaumauslauf 06 gepumpt werden, dass zwischen den beiden Zyklen vorteilhaft ein Abstand oder eine Pause von 10 bis 20 Sekunden vorgesehen ist, in der dann das Reinigungsfluid im Wesentlichen ohne Förderdruck in den entsprechenden Komponenten und Schlauchleitungen verharrt.

In einem nachfolgenden Verfahrensschritt S3.1 kann über die Hilfszuleitung 09 Spülfluid, beispielsweise Wasser, in Richtung des Schaumauslaufs 06 gefördert werden, sodass das Spülfluid die Zuleitung jenseits der Förderpumpe 15, die Fluidkammer und den Milchauslass 06 passiert. In einem weiteren Verfahrensschritt S3.2 kann, abermals durch eine entsprechende rückwärts angetriebene Förderpumpe, Spülfluid auch zurück zum oder in Richtung des Milchanschlusses 16 gefördert werden und ggf. in den Reinigungsgefäß 17 abgegeben werden. Durch ein entsprechendes Ventil kann auch erreicht werden, dass das Spülfluid in den Behälter für verbrauchtes Spülfluid gelangt. Die entsprechende Ventilschaltung ist in der Fig. 3 jedoch nicht dargestellt.

Durch das Spülen mit Spülfluid über die Hilfszuleitung 09 kann erreicht werden, dass Reste des Reinigungsfluids aus der Fluidzuleitung 07 zwischen dem Milchanschluss und der Fluidkammer oder dem Schaumauslauf ausgespült werden.

In einem weiteren Verfahrensschritt S4 kann die Membran 10, wie mit Bezug zur Fig. 2 bereits beschrieben, über den Fluidanschluss 11 zunächst mit Spülfluid, beispielsweise Wasser, beaufschlagt oder geflutet werden, wobei dieses anschließend durch Treibfluid, insbesondere Druckluft, von der ersten Membranoberfläche der Membran 10 zur zweiten Membranoberfläche der Membran 10 gefördert wird und vorteilhaft anschließend durch weiteres Fördern von Treibfluid durch die Membran ein Ausblasen der Membran erfolgt.

Alternativ kann beispielsweise vorgesehen sein, dass während der Förderung der Reinigungsflüssigkeit durch die Fluidkammer die Luftpumpe 12 einen negativen Differenzdruck oder einen Unterdruck im Volumen oder Innenvolumen der Membran 10 aufbaut, der dann dazu führt, dass Teile des durch die Fluidkammer strömenden Reinigungsfluid durch die Membran 10, nämlich von der zweiten Membranoberfläche zur ersten Membranoberfläche, gesaugt wird. In dieser Ausführungsform kann dann anstatt dem Spülen der Membran 10 mit Spülfluid eine Reinigung der Membran 10 mit Reinigungsfluid erreicht werden, indem die zunächst angesaugte Menge an Reinigungsfluid, die an der ersten Membranoberfläche der Membran 10 oder im Volumen, bevorzugt Innenvolumen, der Membran angeordnet ist, ebenfalls durch Treibfluid wieder umgekehrt ausgetrieben wird und von der ersten Membranoberfläche der Membran 10 zur zweiten Membranoberfläche der Membran 10 gefördert wird.

In einem weiteren Verfahrensschritt S5 kann, ähnlich wie bereits mit Bezug zur Fig. 2 beschrieben, durch entsprechende Schaltung des Mehrwege-Ventils 35 erreicht werden, dass Treibfluid auch über die Hilfszuleitung 09 in die Fluidzuleitung 07 gelangt und damit ein Ausblasen von restlichen Fluiden aus der Fluidzuleitung 07 und der Fluidkammer erreicht wird.

### Bezugszeichenliste

- 01: Getränkezubereitungsvorrichtung
- 02: Ausgabemodul
- 03: Heißwasserauslauf
- 04: Getränkebehälter
- 05: Brühkammerauslauf, Brüheinheitsauslauf
- 06: Schaumauslauf
- 07: Fluidzuleitung
- 08: Milchbehälter
- 09: Hilfszuleitung
- 10: Membran
- 11: Fluidanschluss
- 12: Luftpumpe
- 13: Leitung
- 14: Kreuzung
- 15: Förderpumpe
- 16: Milchanschluss
- 17: Reinigungsgefäß
- 18: Zuleitung
- 19: Aufnahmebehälter
- 20: Schaummodul
- 31: Heißwasserbereiter
- 32: Frischwassertank
- 35: Mehrwege-Ventil
- 51: Ausgang
- 52: Auslauf einer Brüheinheit
- S1: Verfahrensschritt
- S2: Verfahrensschritt
- S3: Verfahrensschritt
- S3.1: Verfahrensschritt
- S3.2: Verfahrensschritt
- S4: Verfahrensschritt
- S5: Verfahrensschritt

## Patentansprüche

1. Verfahren zum Betrieb einer Getränkezubereitungsvorrichtung (01), insbesondere eines Kaffeevollautomaten, mit einem Schaummodul (20) umfassend einen Spül- und/oder Reinigungsbetrieb wobei der Spül- und/oder Reinigungsbetrieb durch die folgenden Verfahrensschritte gekennzeichnet ist:
- Durchströmen einer, bevorzugt porösen, Membran (10) des Schaummoduls (20) mit einer Spül- oder Reinigungsflüssigkeit von einer ersten Membranoberfläche zu einer zweiten Membranoberfläche der Membran (10);
- Ableiten der Spül- oder Reinigungsflüssigkeit über eine die Membran (10) umgebende Fluidkammer des Schaummoduls (20) zu einem Fluidauslass der Fluidkammer.

2. Verfahren nach Anspruch 1,
**dadurch gekennzeichnet,**
**dass** die Spül- oder Reinigungsflüssigkeit über einen Fluidanschluss (11) der Membran (10) zugeführt wird und über den Fluidanschluss (11) in ein teilweise von der ersten Membranoberfläche der Membran (10) begrenztes Volumen gelangt.

3. Verfahren nach Anspruch 1 oder 2,
**dadurch gekennzeichnet,**
**dass** die Spül- oder Reinigungsflüssigkeit über ein Treibfluid von der ersten Membranoberfläche zur zweiten Membranoberfläche befördert wird, wobei das Treibfluid, bevorzugt Druckluft, über den Fluidanschluss bereitgestellt wird.

4. Verfahren nach einem der vorhergehenden Ansprüche,
**dadurch gekennzeichnet,**
**dass** die Spül- oder Reinigungsflüssigkeit über einen Fluideinlass der Fluidkammer zugeführt wird und zumindest ein Teil der Spül- oder Reinigungsflüssigkeit zunächst von der zweiten Membranoberfläche der Membran (10) zu der ersten Membranoberfläche der Membran (10) befördert wird.

5. Verfahren nach einem der vorhergehenden Ansprüche,
**dadurch gekennzeichnet,**
**dass** über einen Fluidanschluss (11), der fluidleitend mit einem Volumen der Membran verbunden ist eine negative Druckdifferenz zur Fluidkammer, bevorzugt über eine Fluidpumpe (12), hergestellt wird, so dass die Spül- oder Reinigungsflüssigkeit aus der Fluidkammer über die zweite Membranoberfläche der Membran (10) zur ersten Membranoberfläche der Membran (10) und von dort aus in das Volumen gelangt, bevor über den Fluidanschluss (11) eine positive Druckdifferenz, bevorzugt über die gleiche Fluidpumpe (12), hergestellt wird, so dass die in dem Volumen befindliche Spül- oder Reinigungsflüssigkeit von der ersten Membranoberfläche zu der zweiten Membranoberfläche der Membran (10) gefördert wird.

6. Verfahren nach einem der vorhergehenden Ansprüche,
**dadurch gekennzeichnet,**
**dass** ein Treibfluid, bevorzugt über eine schaltbare Verbindung, über eine Fluidzuleitung (07) in die Fluidkammer eingebracht wird und bei der Beaufschlagung der Fluidzuleitung (07) mit Treibfluid die sonstigen Fluide in der Zuleitung entleert und/oder die Zuleitung entlüftet wird.

7. Verfahren nach einem der vorhergehenden Ansprüche,
**dadurch gekennzeichnet,**
**dass** ein Treibfluid, bevorzugt über eine schaltbare Verbindung, in eine Fluidzuleitung (07) in Richtung eines Milchbehälters eingebracht wird und bei der Beaufschlagung der Fluidzuleitung (07) mit Treibfluid die sonstigen Fluide in der Zuleitung entleert und/oder die Zuleitung entlüftet wird.

8. Verfahren nach Anspruch 6 oder 7,
**dadurch gekennzeichnet,**
**dass** das Treibfluid vor dem Durchströmen der Membran (10) des Schaummoduls (20) mit einer Spül- oder Reinigungsflüssigkeit eingebracht wird.

9. Verfahren nach einem der vorhergehenden Ansprüche,
**dadurch gekennzeichnet,**
**dass** nach dem Durchströmen der Membran (10) des Schaummoduls (20) mit einer Spül- oder Reinigungsflüssigkeit von der ersten Membranoberfläche zu der zweiten Membranoberfläche der Membran (10) ein Treibfluid über einen Fluidanschluss (11) der Membran (10) von der ersten Membranoberfläche zu der zweiten Membranoberfläche der Membran (10) gefördert wird und dabei sonstige Fluide innerhalb der Membran (10) und/oder im Volumen der Membran (10) entleert werden.

10. Verfahren nach einem der vorhergehenden Ansprüche,
**dadurch gekennzeichnet,**
**dass** die Spül- oder Reinigungsflüssigkeit von einem Fluidauslass der Fluidkammer, bevorzugt über eine lösbare Kopplungsleitung, über einen Milchanschluss (16) für einen Milchbehälter (08) und die Fluidzuleitung (07) zum Fluideinlass der Fluidkammer zirkuliert wird.

11. Verfahren nach einem der vorhergehenden Ansprüche,
**dadurch gekennzeichnet,**
**dass** die Spül- oder Reinigungsflüssigkeit durch eine Förderpumpe (15), bevorzugt eine Rollenpumpe, nacheinander in die Fluidzuleitung (07) und von dort aus in die Fluidkammer sowie in die Fluidzuleitung (07) und von dort aus zu einem Milchanschluss (16) für einen Milchbehälter (08) gefördert wird, oder umgekehrt.

12. Verfahren nach einem der vorhergehenden Ansprüche,
**dadurch gekennzeichnet,**
**dass** zu Beginn eines Spül- oder Reinigungsbetriebs die Fluidzuleitung (07) entleert wird, indem eine mit der Fluidzuleitung (07) verbundene Förderpumpe (15) so betrieben wird, dass in der Fluidzuleitung (07) befindliches Fluid in Richtung eines Milchanschlusses (16) für einen Milchbehälter (08) gefördert wird.

## Claims

1. A method for operating a beverage preparation device (01), in particular a bean-to-cup machine, having a frothing module (20) comprising a washing and/or rinsing mode, the washing and/or rinsing mode being **characterized by** the following method steps:
- flowing through a, preferably porous, membrane (10) of the frothing module (20) with a washing or rinsing fluid from a first membrane surface to a second membrane surface of the membrane (10);
- draining the washing or rinsing fluid into a fluids outlet of the fluids chamber via a fluids chamber of the frothing module (20) surrounding the membrane (10).

2. The method according to claim 1,
**characterized in that**
the washing or rinsing fluid is supplied to the membrane (10) via a fluids connection (11) and reaches a volume partially limited by the first membrane surface of the membrane (10) via the fluids connection (11).

3. The method according to claim 1 or 2,
**characterized in that**
the washing or rinsing fluid is conveyed from the first membrane surface to the second membrane surface via a motive fluid, the motive fluid, preferably compressed air, being provided via the fluids connection.

4. The method according to any one of the preceding claims,
**characterized in that**
the washing or rinsing fluid is supplied to the fluids chamber via a fluids inlet, and at least a portion of the washing or rinsing fluid is initially conveyed to the first membrane surface of the membrane (10) from the second membrane surface of the membrane (10).

5. The method according to any one of the preceding claims,
**characterized in that**
a negative pressure-difference to the fluids chamber is established, preferably via a fluids pump (12), via a fluids connection (11), which is connected to a volume of the membrane in a fluid-conducting manner, so that the washing or rinsing fluid reaches the first membrane surface of the membrane (10) from the fluids chamber via the second membrane surface (10) and reaches the volume from the first membrane surface before a positive pressure-difference is established via the fluids connection (11), preferably via the same fluids pump (12), so that the washing or rinsing fluid in the volume is conveyed from the first membrane surface to the second membrane surface of the membrane (10).

6. The method according to any one of the preceding claims,
**characterized in that**
a motive fluid is introduced into the fluids chamber via a fluids inlet (07), preferably via a switchable connection, and the other fluids in the inlet are emptied and/or the inlet is bled when the fluids inlet (07) is subjected to motive fluid.

7. The method according to any one of the preceding claims,
**characterized in that**
a motive fluid is introduced into a fluids inlet (07), preferably via a switchable connection, towards a milk container, and the other fluids in the inlet are emptied and/or the inlet is bled when the fluids inlet (07) is subjected to motive fluid.

8. The method according to claim 6 or 7,
**characterized in that**
the motive fluid is introduced with a washing or rinsing fluid before flowing through the membrane (10) of the frothing module (20).

9. The method according to any one of the preceding claims,
**characterized in that**
after a washing or rinsing fluid has flowed through the membrane (10) of the frothing module (20) from the first membrane surface to the second membrane surface of the membrane (10), a motive fluid is conveyed from the first membrane surface to the second membrane surface of the membrane (10) via a fluids connection (11) of the membrane (10), and other fluids within the membrane (10) and/or in the volume of the membrane (10) are drained in doing so.

10. The method according to any one of the preceding claims,
**characterized in that**
the washing or rinsing fluid is circulated to the fluids inlet of the fluids chamber from a fluids outlet of the fluid chamber, preferably via a detachable coupling line, via a milk connection (16) for a milk container (08) and the fluids inlet (07).

11. The method according to any one of the preceding claims,
**characterized in that**
a conveyor pump (15), preferably a roller pump, conveys the washing or rinsing fluid one after the other into the fluids inlet (07) and from there to the fluids chamber as well as into the fluids inlet (07) and from there to a milk connection (16) for a milk container (08) and vice versa.

12. The method according to any one of the preceding claims,
**characterized in that**
the fluids inlet (07) is emptied at the beginning of a washing or rinsing mode by a conveyor pump (15) connected to the fluids inlet (07) being operated such that fluid in the fluids inlet (07) is conveyed towards a milk connection (16) for a milk container (08).

## Revendications

1. Procédé pour l'opération d'un dispositif (01) de préparation de boissons, notamment une machine à café à grain, ayant un module de mousseur (20) comprenant un mode de lavage et/ou de nettoyage, le mode de lavage et/ou de nettoyage étant **caractérisé par** les étapes de procédé suivantes :
- faire passer un fluide de lavage ou de nettoyage à travers une membrane (10), de préférence une membrane (10) poreuse, du module de mousseur (20) à partir d'une première surface de membrane à une deuxième surface de membrane de la membrane (10) ;
- faire couler le fluide de lavage ou de nettoyage dans une sortie de fluide de la chambre de fluide par une chambre de fluide du module de mousseur (20) encerclant la membrane (10).

2. Procédé selon la revendication 1,
**caractérisé en ce que**
le fluide de lavage ou de nettoyage est fourni à la membrane (10) par une connexion de fluide (11) et atteint un volume partiellement limité par la première surface de membrane de la membrane (10) par la connexion de fluide (11).

3. Procédé selon la revendication 1 ou la revendication 2,
**caractérisé en ce que**
le fluide de lavage ou de nettoyage est acheminé de la première surface de membrane à la deuxième surface de membrane par un fluide moteur, le fluide moteur, de préférence de l'air comprimé, étant fourni par la connexion de fluide.

4. Procédé selon l'une quelconque des revendications précédentes,
**caractérisé en ce que**
le fluide de lavage ou de nettoyage est fourni à la chambre de fluide par une entrée de fluide, et au moins une partie du fluide de lavage ou de nettoyage est initialement acheminée à la première surface de membrane de la membrane (10) à partir de la deuxième surface de membrane de la membrane (10).

5. Procédé selon l'une quelconque des revendications précédentes,
**caractérisé en ce**
**qu'**une différence négative de pression vers la chambre de fluide est établie, de préférence par une pompe à fluide (12), par une connexion de fluide (11), qui est reliée à un volume de la membrane de manière à conduire le fluide, de sorte que le fluide de lavage ou de nettoyage atteint la première surface de membrane de la membrane (10) à partir de la chambre de fluide par la deuxième surface de membrane (10) et atteint le volume à partir de la première surface de membrane avant qu'une différence positive de pression est établie par la connexion de fluide (11), de préférence par la même pompe à fluide (12), de sorte que le fluide de lavage ou de nettoyage dans le volume est transporté à partir de la première surface de membrane à la deuxième surface de membrane de la membrane (10).

6. Procédé selon l'une quelconque des revendications précédentes,
**caractérisé en ce**
**qu'**un fluide moteur est introduit dans la chambre de fluide par une entrée de fluide (07), de préférence par une connexion commutable, et les autres fluides dans l'entrée sont vidés et/ou l'entrée est purgée lorsque l'entrée de fluide (07) est soumise au fluide moteur.

7. Procédé selon l'une quelconque des revendications précédentes,
**caractérisé en ce**
**qu'**un fluide moteur est introduit dans une entrée de fluide (07), de préférence par une connexion commutable, vers un récipient à lait, et les autres fluides dans l'entrée sont vidés et/ou l'entrée est purgée lorsque l'entrée de fluide (07) est soumise au fluide moteur.

8. Procédé selon la revendication 6 ou 7,
**caractérisé en ce que**
le fluide moteur est introduit avec un fluide de lavage ou de nettoyage avant de faire passer à travers la membrane (10) du module de mousseur (20).

9. Procédé selon l'une quelconque des revendications précédentes,
**caractérisé en ce**
**qu'**après qu'un fluide de lavage ou de nettoyage a traversé la membrane (10) du module de mousseur (20) à partir de la première surface de membrane à la deuxième surface de membrane de la membrane (10), un fluide moteur est acheminé à partir de la première surface de membrane à la deuxième surface de membrane de la membrane (10) par une connexion de fluide (11) de la membrane (10), et d'autres fluides à l'intérieur de la membrane (10) et/ou dans le volume de la membrane (10) sont vidés ce faisant.

10. Procédé selon l'une quelconque des revendications précédentes,
**caractérisé en ce que**
le fluide de lavage ou de nettoyage est acheminé à l'entrée de fluide de la chambre de fluide à partir d'une sortie de fluide de la chambre de fluide, de préférence par une conduite de raccordement amovible, par un raccordement laitier (16) pour un récipient à lait (08) et l'entrée de fluide (07).

11. Procédé selon l'une quelconque des revendications précédentes,
**caractérisé en ce**
**qu'**une pompe de transport (15), de préférence une pompe à galets, achemine le fluide de lavage ou de nettoyage successivement dans l'entrée de fluide (07) et de là vers la chambre de fluide ainsi que dans l'entrée de fluide (07) et de là vers un raccordement laitier (16) pour un récipient à lait (08) et vice versa.

12. Procédé selon l'une quelconque des revendications précédentes,
**caractérisé en ce que**
l'entrée de fluide (07) est vidée au début d'un mode de lavage ou de nettoyage par une pompe de transport (15) reliée à l'entrée de fluide (07) et actionnée de telle sorte que le fluide présent dans l'entrée de fluide (07) est acheminé vers un raccordement laitier (16) pour un récipient à lait (08).
